# EUROPÄISCHE PATENTANMELDUNG

(11) **EP 1 126 200 A2**
(43) Veröffentlichungstag der Anmeldung: **22.08.2001**
(21) Anmeldenummer: 00127517.1
(22) Anmeldetag: 15.12.2000
(51) Int. Cl.: F16J 9/14

(54) **Kolbenring mit überlapptem Stoss**

(30) Priorität: 16.02.2000 DE 10006998
(71) Anmelder: Federal-Mogul Burscheid GmbH, 51399 Burscheid (DE)
(72) Erfinder: Dürsch, Volker, 90411 Nürnberg (DE)

(57) **Zusammenfassung**

Die Erfindung betrifft einen Kolbenring für Zweitakt-Brennkraftmaschinen mit schlitzgesteuerten Motoren. Der Kolbenring 1 weist einen überlappten Stoß auf. Auf der Oberfläche der Kolbenringenden, die als Lappen 2, 2' ausgebildet ist, erstreckt sich ein gewölbter Anschlag 3 bis zur Stirnkante 5 des Stoßes.
Auf diese Weise ist eine formschlüssige Verbindung erzeugt.

## Beschreibung

Die Erfindung betrifft einen Kolbenring für Zweitakt-Brennkraftmaschinen mit im Zylinder angeordneten Schlitzen, wobei der Kolbenring einen Stoß mit freien Kolbenringenden aufweist, wobei die Kolbenringenden als ineinandergreifende Lappen ausgebildet sind, die sich auf einer zur Achse des Kolbenringes senkrechten Trennebene berühren, und wobei die Kolbenringenden mit einem formschlüssig ineinandergreifenden Anschlag versehen sind, der ein radiales Ausfedern der Kolbenringenden verhindert.

Das Funktionsverhalten von Kolbenringen ist abhängig von der Fähigkeit, mit ihrem Umfang möglichst dicht an der Zylinderwand anzuliegen. Die radiale Anlage an die Zylinderwand wird durch die eigene Federkraft und durch das hinter den Ring tretende Medium, im Motor der Gasdruck, unterstützt.
Bei einigen Motoren ist der Radialdruck, der durch die eigene Federkraft des Ringes erzeugt wird, im Bereich des Stoßes erhöht, um Flatterbewegungen am Stoß zu dämpfen.

Zweitaktmotoren weisen seitlich im Zylinder Ein- und Auslassschlitze auf. Damit die Kolbenringe für Zweitaktmotoren mit ihren Stoßenden nicht in diese Schlitze geraten, ist es allgemein bekannt, die Kolbenringe im Kolben festzulegen, bzw. gegen Verdrehen zu sichern. Aus dem Stand der Technik sind derartige Verdrehsicherungen bekannt.
Aus der DE PS 939905 ist eine Verdrehsicherung für Kolbenringe zu entnehmen, bei denen auf der Ringfläche wulstförmige Erhöhungen aufgebracht sind, die in korrespondierende Ausnehmungen in der Ringnutoberläche eingreifen. Die Ausnehmungen werden mit so großer Länge in Umfangsrichtung ausgeführt, dass dem Ring eine gewisse Verdrehmöglichkeit in Umfangsrichtung verbleibt. Auf diese Weise soll ein Festsetzen des Ringes vermieden weden. Nachteil dieser Konstruktion ist darin zu sehen, dass die Herstellung des Kolbenringes teuer ist, da die Kolbenflanken nur schwer bearbeitbar sind.
Bei Zweitaktmotoren, deren Ringe nicht fixiert sind, müssen Kolbenringe verwendet werden, deren Radialdruckverteilung über den Umfang so ausgebildet ist, dass die Stoßenden nach radial innen gerichtet sind, diese Radialdruckverteilung verursacht aber im Motor ein geringeres Formfüllvermögen.

Aus der CH 482 954 ist ein gattungsgemäßer Kolbenring zu entnehmen. Der Kolbenring ist am Stoß so ausgebildet, dass die beiden Stoßenden sich miteinander verhaken, um so nicht radial nach aussen schieben zu können. Eine Verdrehsicherung ist nicht notwendig. Es hat sich aber gezeigt, dass bei modernen Motoren diese Art der Stoßführung nicht ausreicht, da im stoßnahen Bereich die Stoßenden nicht geführt sind. Auf diese Weise können bei hohen Gasdrücken die Stoßenden doch noch radial zur Zylinderwand ausfedern.

Der Erfindung liegt die Aufgabe zugrunde, einen gattungsgemäßen Kolbenring dahingehend zu verbessern, dass er insbesondere für den Einsatz in Hochleistungsmotoren einsetzbar ist.

Diese Aufgabe wird erfindungsgemäß durch die Merkmale des Anspruch 1 gelöst. Vorteilhafte Ausgestaltungen der Erfindung sind in den Unteransprüchen dokumentiert.

Durch die Anordnung des Anschlages auf die Oberfläche der Lappen und unmittelbar bis an die Ringenden herangeführt, ist gewährleistet, dass die Enden auch bei hohen Zylinderdrücken gegen radiales Ausfedern gesichert sind. Die Ringenden können so nicht mehr in die Schlitze der Zylinder einhaken, gleichzeitig kann auf eine Verdrehsicherung verzichtet werden.

Die Erfindung ist in der Zeichnung anhand von Ausführungsbeispielen dargestellt und wird im folgenden näher erläutert.

Es zeigen:
- Figur 1: Ansicht eines erfindungsgemäßen Kolbenringstoßes
- Figur 2: Alternative Ausgestaltung des Kolbenringstoßes gemäß Figur 1

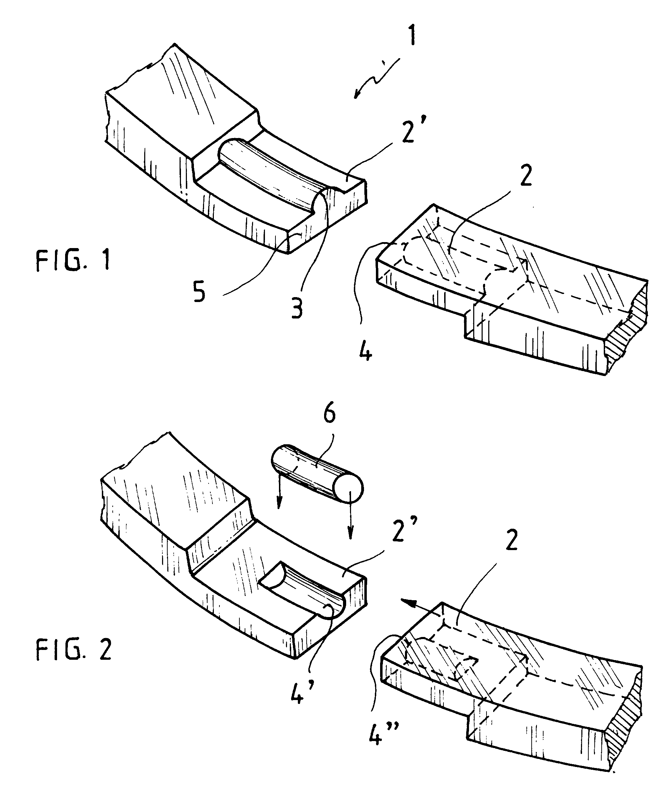

Die Figur 1 zeigt einen Ausschnitt einer erfindungsgemäßen Kolbenringes 1. Der Kolbenring 1 weist einen Stoß mit freien Kolbenringenden auf. Diese Kolbenringenden sind als ineinandergreifende Lappen 2, 2' ausgebildet, die sich auf einer zur Achse des Kolbenringes 1 senkrechten Trennebene berühren. Auf der Oberfläche eines Lappen 2, 2' ist ein Anschlag 3 in Form einer erhabenen, konvexen Wölbung angeordnet. Der gegenüberliegende Lappen 2, 2' weist die dazu passenden konkave Wölbung 4 auf. Der Anschlag 3 erstreckt sich entlang des Lappens 2' bis zur Stirnkante 5 des Stoßes.
Der Anschlag 3 ist durch eine Fräsoperation bei der Herstellung des Lappens 2' kostengünstig herzustellen. Durch die gewölbte Form ist keine Kerbwirkung, die zum Brechen des Ringes führen könnte, gegeben. Sämtliche Kanten an den Übergängen der gefrästen Lappen 2, 2' sind verrundet (nicht dargestellt), um auch hier Kerbwirkungen vorzubeugen.
Diese Art der Ringführung eignet sich darüber hinaus auch für besonders niedrige Ringe, da es schon ausreicht, den Anschlag 3 nur mit geringer Höhe aus der Oberfläche der Trennebene herauszubilden.

In der Figur 2 ist einen alternative Kolbenringführung dargestellt. Der Anschlag besteht aus einem separaten Bauteil 6 in Form eines Runddrahtes.
Die Lappen 2, 2' können mit dem gleichen Fräswerkzeug bearbeitet werden.
Der Runddraht 6 wird in die Ausnehmungen 4', 4" eingelegt und kann dort mittels Kleber oder anderen Verbindungsmöglichkeiten fixiert werden. Es ist auch denkbar, statt eines Runddrahtes 6 eckige Bauteile zu verwenden.

## Patentansprüche

1. Kolbenring für Zweitakt-Brennkraftmaschinen mit im Zylinder angeordneten Schlitzen, wobei der Kolbenring einen Stoß mit freien Kolbenringenden aufweist, wobei die Kolbenringenden als ineinandergreifende Lappen ausgebildet sind, die sich auf einer zur Achse des Kolbenringes senkrechten Trennebene berühren, und wobei die Kolbenringenden mit einem formschlüssig ineinander greifenden Anschlag versehen sind, der ein radiales Ausfedern der Kolbenringenden verhindert, dadurch gekennzeichnet, dass der Anschlag (3,6) in der senkrechten Trennebene auf der Oberfläche der Lappen (2,2') angeordnet ist und sich entlang der Lappen (2,2') bis zur Stirnkante (5) des Stoßes erstreckt.

2. Kolbenring nach Anspruch 1, dadurch gekennzeichnet, dass die Oberfläche des einen Lappen (2') konvex gewölbt und die Oberfläche des anderen Lappen (2) eine korrespondierende konkave Wölbung (4) aufweist.

3. Kolbenring nach Anspruch 1 und 2, dadurch gekennzeichnet, dass die Lappen (2,2') partielle Wölbungen aufweisen.

4. Kolbenring nach mindestens einem der Ansprüche 1 bis 3, dadurch gekennzeichnet, dass der Anschlag (3,6) mittels eines partiell auf der Oberfläche des Lappens (2,2') angeordneten Elementes gebildet ist.

5. Kolbenring nach Anspruch 4, dadurch gekennzeichnet, dass das Element einstückig mit dem Kolbenring (1) verbunden ist.

6. Kolbenring nach Anspruch 5, dadurch gekennzeichnet, dass das Element eine gerundete oder eckige Querschnittsform aufweist.

7. Kolbenring nach mindestens einem der Ansprüche 1 bis 4 und 6, dadurch gekennzeichnet, dass das Element ein separates Bauteil (6) ist.

8. Kolbenring nach Anspruch 7, dadurch gekennzeichnet, dass das Element ein Runddraht ist.
